(19) Europäisches Patentamt
European Patent Office
Office européen des brevets

(11) Veröffentlichungsnummer: **0 523 321 A1**

(12) # EUROPÄISCHE PATENTANMELDUNG

(21) Anmeldenummer: **92104931.8**

(51) Int. Cl.[5]: **C08J 5/12**

(22) Anmeldetag: **21.03.92**

(30) Priorität: **16.07.91 DE 4123561**

(43) Veröffentlichungstag der Anmeldung: **20.01.93 Patentblatt 93/03**

(84) Benannte Vertragsstaaten: **AT BE CH DE DK ES FR GB IT LI NL**

(71) Anmelder: **MECO ENERGIE-KOLLEKTOREN GmbH**
**Radolfzeller Strasse 56**
**W-7753 Allensbach(DE)**

(72) Erfinder: **Lehmann, Uwe**
**Elisabeth-Mühlenweg-Str. 12**
**W-7753 Allensbach(DE)**

(74) Vertreter: **Grättinger, Günter**
**Wittelsbacherstrasse 5 Postfach 16 49**
**W-8130 Starnberg(DE)**

(54) **Klebstoff für transparente Kunststoffe.**

(57) Der Klebstoff auf Polyhydroxyaren-Derivat gemäß der Formel I ermöglicht es, Teile aus Polyester auf ökonomische Weise dauerhaft glasklar miteinander zu verkleben, wobei ausgezeichnete Festigkeitswerte der Verklebung bei einfacher Durchführung auf handelsüblichen automatischen Lösungsmittel-Klebestationen erreicht werden. Besonders geeignete Klebstofformulierungen stellen die 4-Komponentenmischungen aus 4-Acetoxyphenol als Hauptbestandteil und 1,3-, 1,4-Dimethoxybenzol sowie 4-Methoxyphenol als Nebenkomponenten dar.

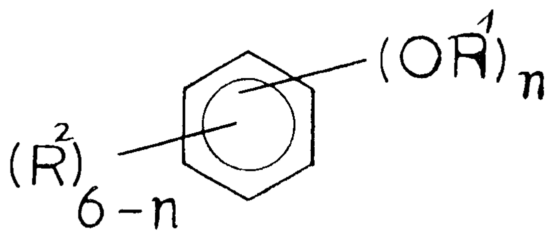

I

EP 0 523 321 A1

Die Erfindung betrifft einen Klebstoff auf der Basis Polyhydroxyaren-Derivat, der es ermöglicht, Teile aus transparenten Kunststoffen, insbesondere Polyester (PET), auf ökonomische Weise dauerhaft glasklar miteinander zu verkleben.

Als Klebstoffe für PET werden üblicherweise Lösungen kurzkettiger Polyester in geeigneten Lösungsmitteln, Kontaktkleber auf Poly(2-chlor-1,3-butadien)- bzw. auf Poly(2-methyl-1,3-butadien)-Basis, 2-Komponenten-Kleber auf Polyester- bzw. Epoxid-Basis sowie Sekundenkleber auf Cyanacrylat-Basis eingesetzt.

Diese Klebstoffe weisen neben einem relativ hohen Preis den Nachteil auf, daß die Klebstellen in der Regel schon von vornherein nicht glasklar transparent sind bzw. sich nach einer gewissen Zeitspanne eintrüben bzw. verfärben.

Vor allem bei der Verklebung von PET-Folien für Verpackungszwecke wird dies als sehr störend empfunden.

Desweiteren lassen sich bekannte 2-Komponenten-Kleber auf den heute gebräuchlichen Maschinen (z.B. Anlagen zur Herstellung von Faltschachteln) nicht verarbeiten. Ebenfalls führen handelsübliche Schmelzkleber aus Gründen sehr hoher Viskosität, sehr kurzer Verarbeitungszeit usw. zu erheblichen Beeinträchtigungen bei der Verarbeitung.

Es wurde vorgeschlagen, PET-Folien mit Folien aus anderen Materialien zu kaschieren, die sich leichter als reine PET-Folien glasklar verkleben lassen. Diese Verbundfolien weisen jedoch unter anderem den Nachteil auf, daß ihre Herstellungskosten deutlich über denen der reinen PET-Folien liegen. Derartige Verbundfolien haben überdies den großen Nachteil, daß sie zumeist nicht recyclingfähig sind.

Weiterhin sind spezielle PET-Folien aus dem Rohstoff PETG des Herstellers Kodak Eastman handelsüblich; diese Folien sind glasklar und mit herkömmlichen Lösungsmitteln verklebbar; sie werden auch als Verbundfolien mit einer Trägerschicht aus PET (amorph) hergestellt.

Allerdings sind derartige Folien sehr hochpreisig und als Verbundfolie schwer recyclingfähig.

Der Erfindung liegt die Aufgabe zugrunde, einen Klebstoff zur Verfügung zu stellen, der in der Lage ist, alle handelsüblichen transparenten Kunststoffe, insbesondere Polyester-Materialen, dauerhaft glasklar miteinander in wirtschaftlicher Weise auf handelsüblichen Anlagen zu verkleben.

Diese Aufgabe wird durch die Merkmale des Patentanspruchs 1 gelöst.

Es wurde überraschenderweise gefunden, daß sich nieder-molekulare Polyhydroxyaren-Derivate als Transparentklebstoffe für PET eignen.

Die erfindungsgemäßen Polyhydroxyaren-Derivate weisen mindestens zwei sauerstoffhaltige Funktionen auf, wobei diese als Hydroxy- und/oder Alkoxy- und/oder Alkanoyloxy-Funktionen ausgebildet sein können.

Unter Arenen sollen hier - wie üblicherweise - aromatische Verbindungen verstanden werden, deren gemeinsames Merkmal darin besteht, daß sie mindestens einen Benzolring aufweisen.

Demgemäß fallen unter die erfindungsgemäße Substanzklasse neben der Stammverbindung Benzol (einkerniges Aren) die mehrkernigen Arene (Biphenyl, Terphenyl usw.), Polyaryl-alkane (z.B. Diphenylalkane, wie z.B. 2,2-Diphenyl-propan) sowie kondensierte Aromaten (wie z.B. Naphthalin, Anthracen, Phenanthren usw.).

Aus ökonomischen Erwägungen sind jedoch Polyhydroxy-benzol-Derivate gemäß der folgenden Formel I

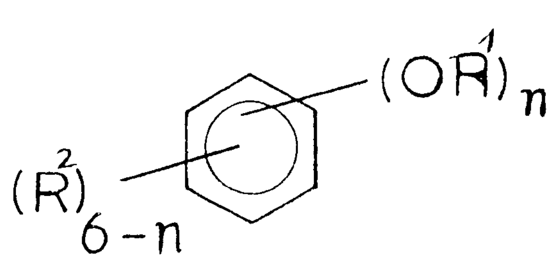

I

bevorzugt, wobei $2 \leqq n \leqq 6$ ist, $R^1$ für H, Alkyl, Aryl, Alkylcarbonyl oder Arylcarbonyl und $R^2$ jeweils für H oder beliebige aromatische Substituenten steht. Die jeweilige sauerstoffhaltige Funktion $OR^1$ kann dementsprechend eine Hydroxy-, Alkoxy-, Aryloxy-, Alkanoyloxy- oder oder Aroyloxygruppe sein, wobei die sauerstoffhaltigen Gruppen $OR^1$ entweder gleich oder verschieden sein können.

Der Rest $R^2$ unterliegt prinzipiell keiner Einschränkung, mit der Ausnahme, daß dieser keine chromophore Gruppe mit einer Absorption im Wellenlängenbereich zwischen 400 und 800 nm aufweisen, sowie bei

einer Stellung unmittelbar neben einer Hydroxy-Gruppe keine allzu sperrige Gruppe, wie z.B. i-Propyl oder t-Butyl, sein darf.

Aus diesen Gründen sind für den Rest $R^2$ Alkyl-Gruppen bevorzugt, insbesondere niedrige n-Alkyl-Gruppen, wie z.B. Methyl-, Ethyl-, n-Propyl- oder n-Butyl-Gruppen.

Nicht zuletzt aus ökonomischen Gründen sind großtechnisch erzeugte Polyhydroxyaren-Derivate besonders bevorzugt, insbesondere wenn sich diese durch geringe Toxizität und Lichtempfindlichkeit auszeichnen.

Ganz besonders bevorzugt sind deshalb aus der Substanzklasse der Dihydroxy-benzole neben dem 1,2-Dihydroxy-benzol (Brenzcatechin) und dem 1,4-Dihydroxy-benzol (Hydrochinon), das 1,3-Dihydroxy-benzol (Resorcin) sowie dessen Alkyl- oder Halogen-Derivate, wie z.B. 1,3-Dihydroxy-2-methyl-benzol, 1,3-Dihydroxy-5-methyl-benzol (Orcin), 1,3-Dihydroxy-4-ethyl-benzol, 1,3-Dihydroxy-4-hexyl-benzol sowie 1-Chlor-2,5-dihydroxy-benzol.

Aus der Substanzklasse der Trihydroxy-benzole ist neben 1,2,3-Trihydroxy-benzol (Pyrogallol) besonders bevorzugt das 1,3,5-Trihydroxy-benzol (Phloroglucin) sowie deren alkylsubstituierten Derivate.

Aus der Substanzklasse der Alkoxy-hydroxy-arene sind bevorzugt 3- und 4-Alkoxyphenole, insbesondere 3- und 4-Methoxyphenol.

Aus der Substanzklasse der Dialkoxy-arene sind bevorzugt die 1,3- und 1,4-Dialkoxy-arene, insbesondere 1,3- und 1,4-Dimethoxybenzol.

Aus der Substanzklasse der Alkanoyloxy-arene sind bevorzugt die Acetoxybenzole bzw. -phenole, insbesondere 3- und 4-Acetoxyphenol.

Die Polyhydroxyaren-Derivate, die bei Raumtemperatur Feststoffe sind, werden für eine bei Raumtemperatur durchzuführende Verklebung zweckmäßigerweise in einem geeigneten organischen Lösungsmittel aufgelöst.

Als geeignete Lösungsmittel erweisen sich solche, die die erfindungsgemäße Polyhydroxy-arene gut bis sehr gut lösen sowie das zu verklebende PET zumindest oberflächlich anzuquellen vermögen.

Als besonders geeignet haben sich unter diesen Gesichtspunkten Vertreter aus den Lösungsmittelklassen der Haloalkane, Ester, Ketone und Alkohole erwiesen, die vorzugsweise einen Siedepunkt unter 100 °C aufweisen. Sehr gut geeignet sind demgemäß Dichlormethan, 1,1,1-Trichlorethan, Propanon (Aceton), Butanon, 3-Methyl-2-butanon, Ameisen- bzw. Essigsäurealkylester sowie Alkanole, wie z.B. 1-Propanol oder 2-Propanol.

Ganz besonders bevorzugt ist aufgrund seiner geringen Toxizität und seines niedrigen Siedepunkts (57 °C) Essigsäure-methylester (Methylacetat).

Neben dem reinen Lösungsmittel können auch Lösungsmittelgemische, entweder als Mischung eines niedrig siedenden Lösungsmittels mit seinem höher siedenden Homologen oder mit einem bzw. mehreren Vertretern aus einer anderen, oben aufgeführten Lösungsmittelklasse eingesetzt werden. Hierdurch lassen sich die "offenen Zeiten" des erfindungsgemäßen Klebstoffs sowie dessen Viskosität in gewissen Grenzen beliebig variieren.

Diese Größen lassen sich auch durch den Lösungsmittel-Gehalt des erfindungsgemäßen Klebstoffs in weitem Umfang einstellen, wobei der Lösungsmittel-Gehalt prinzipiell zwischen 0 und 99 Massen-%, bezogen auf die Gesamtmasse des Klebstoffs, variieren kann.

Aufgrund praktischer Erwägungen sind jedoch Lösungsmittelkonzentrationen zwischen 20 und 80 Massen-% bevorzugt, wobei ganz besonders bevorzugt Konzentrationen zwischen 45 und 70% sind.

Gelegentlich kann eine Klebstoffkomponente, die bei Raumtemperatur ein Feststoff ist, in einem gewissen Zeitraum nach der Verklebung auskristallisieren, was zu einer unerwünschten Eintrübung bzw. Weißfärbung der Klebnaht führt. Dieser Effekt kann insbesondere dort auftreten, wo eine Klebstofflage nicht abgedeckt vorhanden ist, z.B. in schmalen, beim Zusammenfügen der zu verklebenden Teile verbleibenden Räumen längs Stoßkanten oder dort, wo es im Zuge des maschinellen Verklebungsprozesses zu einem Verschmieren von Klebstoffspuren kommt.

Es wurde nun gefunden, daß sich dieses unerwünschte Auskristallisieren verringern bzw. vermeiden läßt durch die Zugabe eines "Kristallisationshemmers", wofür sich insbesondere Carbonylverbindungen, z.B. Ketone, Carbonsäuren, Carbonsäure-ester und - anhydride, eignen. Als besonders geeignet erweisen sich für diesen Zweck (E)-4-Phenyl-3-buten-2-on, Benzo[c]oxolen-2,5-dion, 1,5-Pentandisäure, Essigsäure sowie Essigsäurevinylester, deren Anteil an der Gesamtklebstoffmasse vorzugsweise nicht mehr als 25% beträgt.

Für die praktische Anwendung des erfindungsgemäßen Klebstoffs ist es von Vorteil, je nach der speziellen Art der auszuführenden Verklebung die Viskosität des Klebstoffs in einem großen Bereich "einstellen" zu können. Diese kann zum einen durch das Verhältnis Klebstoff zu Lösungsmittel in einem gewissen Bereich variiert werden. Andererseits ist es, insbesondere im Bereich höherer Viskositäten, von Vorteil, als Klebstoffkomponente von vorneherein eine hochviskose Flüssigkeit einzusetzen.

Als geeignet hierfür haben sich Acetoxyaren-Derivate erwiesen, insbesondere 1,3- und 1,4-Diacetoxybenzol sowie 3- und 4-Acetoxyphenol.

Das 3-Acetoxyphenol weist zwar als alleinige Klebstoffkomponente nur eine geringe Klebekraft auf; diese läßt sich jedoch durch den Zusatz von Alkoxy-hydroxy-arenen bedeutend steigern, ohne daß dies zu Lasten der Transparenz geht. Besonders geeignet sind hierfür 1,3- und 1,4-Dimethoxybenzol sowie 3- und 4-Methoxyphenol, die entweder als alleiniger Zusatz (im Sinne eines Lösungsmittels bzw. Viskositätsverminderungsmittels) oder in Kombination mit einer zweiten Komponente aus der selben Verbindungsklasse zu sehr befriedigenden Klebstoffeigenschaften führen.

Als ganz besonders geeignet hat sich eine Mischung der Hauptkomponente 3-Acetoxyphenol (52-76%) mit je ca. 8-16% 1,3-, 1,4-Dimethoxybenzol sowie 4-Methoxyphenol erwiesen. Durch die Mengenanteile der Zusatzkomponenten läßt sich hierbei gezielt jeweils die Anfangs- bzw. Endklebekraft in gewissen Bereichen einstellen. Beispielsweise beschleunigt der Zusatz von 1,4-Dimethoxybenzol die Verklebung, d.h. es wird eine hohe Anfangsfestigkeit zu Lasten der Endfestigkeit erzielt. Umgekehrt führt die Beimischung von 4-Methoxyphenol bei einer vergleichsweise geringeren Anfangsfestigkeit zu einer höheren Endfestigkeit.

Ein zum Verkleben von PET-Teilen mit dem erfindungsgemäßen Klebstoff geeignetes Verfahren besteht aus folgenden Schritten:

- Die zu verklebenden PET-Teile werden an den Klebstellen staubfrei gemacht und anschließend getrocknet.
- Der erfindungsgemäße Klebstoff wird auf einen der zu verklebenden PET-Teile in dünner Schicht aufgebracht.
- Innerhalb der offenen Zeit des Klebstoffs wird die Verklebung durch Zusammenpressen der PET-Teile erzielt.

Der Anpreßdruck, der auf die zu verklebenden PET-Teile ausgeübt wird, beträgt mindestens 0.05 MPa, vorzugsweise mindestens 1 MPa.

Im Interesse einer hohen Verarbeitungsgeschwindigkeit wird die "offene Zeit", d.h. die Zeit, in der der Großteil des Lösungsmittels aus dem erfindungsgemäßen Klebstoff abgedampft ist, zweckmäßigerweise unter 60 s, vorzugsweise unter 30 s, eingestellt.

Die Schichtdicke des auf das PET-Teil aufgebrachten Klebstoffilms beträgt zwischen 0,2 nm und 10 µm, wobei geringe Schichtdicken bevorzugt sind.

Die Aushärtezeiten, d.h. der Zeitraum, in dem die Endfestigkeit der Verklebung erreicht wird, liegen in der Regel unter 120 min.

Als Polyester-Materialien werden Poly(ethylenterephthalat) (PETP) und Poly(butylenterephthalat) (PBTP) bevorzugt. Der erfindungsgemäße Klebstoff ist besonders geeignet zum Transparentkleben von amorphen, hochtransparenten PETP-Folien ("APET"), obwohl auch alle anderen handelsüblichen PETP-Folien und -Platten (unabhängig von firmenspezifischen Additiven), amorphe Spritzgußteile, Blas- und Hohlkörper aller Art in hoher Güte verklebt werden können. Auch bei mit Antistatika oder Antiblockmitteln behandelten Oberflächen ist eine in ihrer Güte mindestens gleichwertige Verklebung erzielbar.

Die Verklebung mit dem erfindungsgemäßen Klebstoff weist folgende Vorzüge auf:

- hochtransparente Klebstellen;
- hohe Klebfestigkeit ($\geqq$ 1 N/mm Schälfestigkeit pro mm Folienbreite);
- gute Anfangsfestigkeit;
- kurze Aushärtezeiten;
- verklebte Folien sind voll mit der Folie (bis zur Zerstörung der Folie) verreckbar;
- keine Spannungsrißkorrosion, selbst nach längerer Lagerung keine Kerbung oder Versprödung;
- keine Verfärbung oder Eintrübung der Klebestellen, selbst nach längerer Lagerung am Licht;
- einfache Verarbeitung auf kommerziell erhältlichen automatischen Lösungsmittelklebestationen.

Der erfindungsgemäße Klebstoff eignet sich auch zum Verkleben von anderen Kunststoffen wie z.B. Polyamid, Poly(methylmethacrylat) oder Polycarbonat.

Im Folgenden wird ein typisches Klebeverfahren anhand der Zeichnung erläutert. Es zeigen:

Fig. 1 in schematischer Darstellung eine Vorrichtung zum Verkleben von PET-Folien;

Fig. 2 in schematischer Darstellung eine Schälvorrichtung zur Durchführung der Festigkeitsprüfung an der Verklebung;

Fig. 3 ein bei einem Schältest gewonnenes Meßprotokoll.

In Fig. 1 ist eine Vorrichtung zum Verkleben von PET-Folien in vereinfachter Darstellung aufgeführt, worin zwei PET-Folienbahnen 1, 1' durch Aufbringen des erfindungsgemäßen Klebstoffs 2 und anschließendes Durchziehen der Folienbahnen 1, 1' durch Abquetschwalzen 3, 4 verklebt werden. Hierbei wird über die freilaufende Andruckwalze 3 der eigentliche Anpreßdruck ausgeübt, während die feststehende Walze 4 als starres Gegenlager dient, wobei die verklebten Folien 1, 1' in Abzugsrichtung 5 zwischen den Abquetschwalzen durchgezogen werden. Beim Einsatz von extrudierten, amorphen PETP-Folien ("APET"), gelingt es hierbei, den amorphen Zustand der Folien zu erhalten, d.h. die glasklare Transparenz auch an den Klebestellen zu bewahren.

In Fig. 2 ist eine Schälvorrichtung schematisch dargestellt, worin der sog. 180°-T-Peel-Test zur Bestimmung der Festigkeit der Verklebung durchgeführt wird. Hierbei werden die verklebten Folien 1, 1' nach Einklemmen in eine Folieneinspannung 8 durch Anlegen einer Zugkraft 9 über die Umlenkwalzen 7, 7' am Schälpunkt 6 aufgeschält.

Zur Bestimmung der Schälkraft wurden zwei extrudierte, amorphe PETP-Folien 1, 1' von 350 mm Länge, 20 mm Breite und 250 µm Dicke in einem Abschnitt von 50 mm Länge durch Aufbringen eines Tropfens Klebstoffs, bestehend aus 40 Massen-% 1,3-Dihydroxy-benzol und 60 Massen-% Essigsäuremethylester, verklebt, wobei die Folien 1, 1' 5 s nach Aufbringen des Klebstoffs mit einer Abzugsgeschwindigkeit von 10 cm/s zwischen den Abquetschwalzen 3, 4 (Anpreßdruck: 10 N/cm Walzenbreite) durchgezogen wurden. Anschließend wurden die verklebten Folien 1, 1' 120 min der Aushärtung überlassen.

Der in Fig. 2 schematisch dargestellte 180°-T-Peel-Test wurde auf einer handelsüblichen Universalprüfmaschine (Roell + Karthaus RKN 50) bei einer Aufschälgeschwindigkeit von 10 mm/min durchgeführt, wobei eine integrierte Kraftmeßdose die gemessenenen Schälkräfte als elektrisches Signal an einen y-t-Schreiber ausgibt.

Zur Ermittlung der Schälkräfte werden die Signalspitzen herangezogen, da nur in den Signalspitzen ein Aufschälen der Klebung erfolgt. Die Bereiche zwischen den Signalspitzen sind der Bereich eines erneuten Kraftaufbaus (elastische Verformung der Folie).

Ein derart erhaltenes Meßprotokoll ist in Fig. 3 aufgeführt. In der nachfolgenden Tabelle 1 sind die hierdurch gewonnenen Meßwerte aufgeführt:

Tabelle 1

| Schälkräfte | |
|---|---|
| F(1) | 85 N |
| F(2) | 90 N |
| F(3) | 96 N |
| F(4) | 36 N |
| F(5) | 121 N |
| F(6) | 133 N |
| F(7) | 116 N |
| F(8) | 120 N |
| F(9) | 78 N |
| F(10) | 92 N |

Als Mittelwert

$$\frac{\Sigma F_i}{10}$$

aus den Werten F(1)-F(10) ergibt sich 96,7 N; bezogen auf die eingesetzte Folienbreite von 20 mm somit eine Festigkeit gegenüber Schälbeanspruchungen von 4.8 N/mm Folienbreite.

In der nachfolgenden Tabelle 2 sind die Klebstoffeigenschaften einer Reihe relativ niedrig viskoser Klebstofformulierungen, vorzugsweise mit Zusatz von Kristallisationshemmern, sowie die von Phenol als Vergleichssubstanz (hohe Schälkraft, aber starke Eintrübung der Klebnaht) aufgeführt. Eine Serie von relativ höher viskosen Klebstofformulierungen sind in der nachfolgenden Tabelle 3 aufgeführt, wobei insbesondere die 4-Komponenten-Mischungen Nr. 14-16 im Sinne der gestellten Aufgabe als besonders geeignet erscheinen. Die Abkürzungen der eingesetzten Klebstoffkomponenten sind in Tabelle 4, die der verwendeten Kristallisationshemmer bzw. Lösungsmittel in Tabelle 5 aufgeführt.

Tabelle 2: Klebstoffeigenschaften der niedrig viskosen Klebstoffe mit Kristallisationshemmer

| Nr. | Zusammensetzung 1) | Gehalt [%] | Festigkeit 2) nach 5 sec | 30 sec | > 2 h | Kristallisation nach 3) [min] | Transparenz 4) | Schälkraft 5) [N] |
|---|---|---|---|---|---|---|---|---|
| 1 | 1,3-DHB<br>EME | 35<br>65 | 0 | 0 | 0 | 2 - 3 | 0 - 1 | 4,9 |
| 2 | 1,3-DHB<br>EME<br>PBO | 32,3<br>60,0<br>7,7 | 0 | 0 | 0 | < 10 | 0 - 1 | 7,2 |
| 3 | 1,3-DHB<br>EME<br>PBO | 26,3<br>48,7<br>25,0 | 0 - 1 | 0 | 0 | > 180 | 0 - 1 | 7,8 |
| 4 | 1,3-DHB<br>EME<br>HoAC | 33,3<br>65,0<br>1,7 | 0 | 0 | 0 | 3 - 5 | 0 - 1 | 4,1 |
| 5 | 1,3-DHB<br>EME<br>HoAC | 32,3<br>60,0<br>7,7 | 1 - 2 | 1 - 2 | 1 | < 60 | 0 - 1 | 2,1 |
| 6 | 1,3-DHB<br>EME<br>3-APh | 31,9<br>59,1<br>9,0 | 0 | 0 | 0 | < 60 | 0 | 5,8 |

| Nr. | Zusammen- 1) setzung | Gehalt [%] | Festigkeit 2) nach 5 sec | 30 sec | > 2 h | Kristal-lisation nach 3) [min] | Trans-parenz 4) | Schälkraft 5) [N] |
|---|---|---|---|---|---|---|---|---|
| 7 | 1,3-DHB<br>EME<br>3-APh | 30,0<br>55,7<br>14,3 | 0 | 0 | 0 | 60 | 0 | 5,2 |
| 8 | 1,3-DHB<br>EME<br>3-APh | 26,3<br>48,7<br>25,0 | 0 | 0 | 0 | > 180 | 0 | 6,7 |
| 9 | 1,3-DHB<br>EME<br>3-APh | 22,5<br>52,5<br>25,0 | 0 | 0 | 0 | > 180 | 0 | 5,1 |
| 10 | 1,3-DHB<br>EME<br>PDS | 26,25<br>48,75<br>25,00 | 1 | 1 | 1 | > 120 | 0 - 1 | 2,1 |
| 11 | 1,3-DHB<br>EME<br>BOD | 32,3<br>60,0<br>7,7 | 1 | 1 | 0 - 1 | > 120 | 0 - 1 | 3,2 |
| 12 | 1,2,5-CDB<br>EME | 33,3<br>66,6 | 1 | 0 - 1 | 1 | < 2 | 0 - 1 | 1,8 |

| Nr. | Zusammensetzung 1) | Gehalt [%] | Festigkeit 2) nach 5 sec | 30 sec | > 2 h | Kristallisation nach 3) [min] | Transparenz 4) | Schälkraft 5) [N] |
|---|---|---|---|---|---|---|---|---|
| 13 | 1,3,5-THB<br>EME | 11,1<br>88,9 | 2 | 1 - 2 | 1 | < 3 | 0 - 1 | 2,0 |
| 14 | 1,3,5-THB<br>EEE | 35,0<br>65,0 | 0 | 0 | 0 | 10 | 1 | 12,4 |
| 15 | PhOH 6) | 100 | 2 - 3 | 2 | 0 | > 60 | 2 | 14,4 |
| 16 | 1,3-DHB<br>EME<br>PBO<br>3-APh | 26,2<br>48,8<br>12,5<br>12,5 | 0 | 0 | 0 | > 240 | 0 | 6,8 |
| 17 | 1,3-DHB<br>EME<br>PBO<br>3-APh | 26,2<br>48,8<br>15,0<br>10,0 | 0 | 0 | 0 | > 280 | 0 | 7,2 |

Tabelle 3: Klebstoffeigenschaften der höher viskosen Klebstoffe

| Nr. | Zusammensetzung 1) | Gehalt [%] | Festigkeit 2) nach 5 min | 10 min | 1 d | Endfest. | Transparenz 4) | Schälkraft 5) [N] |
|---|---|---|---|---|---|---|---|---|
| 1 | 3-APh | 100 | 3 | 3 | 2 - 3 | 2 - 3 | 0 | 0,4 |
| 2 | 1,4-DHB<br>EME | 30<br>70 | 1 | 1 | 1 - 2 | 1 - 2 | 1 - 2 | 1,8 |
| 3 | 4-MPh<br>EME | 30<br>70 | 2 | 1 - 2 | 1 | 1 | 1 | 2,8 |
| 4 | 1,3-DMB | 100 | 0 | 0 | 0 | 0 | 2 | 7,4 |
| 5 | 3-MPh | 100 | 1 | 1 | 0 - 1 | 1 | 0 - 1 | 2,1 |
| 6 | 3-APh<br>1,4-DMB | 80<br>20 | 3 | 3 | 3 | 3 | 1 | 0,3 |
| 7 | 3-APh<br>4-MPh | 80<br>20 | 3 - 4 | 3 | 2 | 2 | 1 | 1,3 |
| 8 | 3-APh<br>1,3-DMB | 80<br>20 | 2 | 2 | 1 - 2 | 1 - 2 | 0 - 1 | 1,9 |

| Nr. | Zusammensetzung 1) | Gehalt [%] | Festigkeit 2) nach 5 min | 10 min | 1 d | Endfest. | Transparenz 4) | Schälkraft 5) [N] |
|---|---|---|---|---|---|---|---|---|
| 9 | 3-APh<br>3-MPh | 80<br>20 | 3 | 2 | 1 - 2 | 1 - 2 | 0 - 1 | 1,6 |
| 10 | 3-APh<br>1,4-DMB<br>1,3-DMB | 61<br>23<br>16 | 0 - 1 | 0 | 1 | 1 | 0 - 1 | 2,7 |
| 11 | 3-APh<br>1,4-DMB<br>3-MPh | 61<br>23<br>16 | 1 - 2 | 1 - 2 | 2 | 2 | 0 - 1 | 1,0 |
| 12 | 3-APh<br>4-MPh<br>1,3-DMB | 61<br>23<br>16 | 1 | 1 | 0 - 1 | 0 - 1 | 0 - 1 | 3,5 |
| 13 | 3-APh<br>4-MPh<br>3-MPh | 61<br>23<br>16 | 2 | 2 | 2 - 3 | 2 - 3 | 0 - 1 | 0,6 |
| 14 | 3-APh<br>1,4-DMB<br>4-MPh<br>1,3-DMB | 61,0<br>15,5<br>8,0<br>15,5 | 0 - 1 | 0 | 0 - 1 | 1 | 0 | 2,9 |

| Nr. | Zusammen- 1) setzung | Gehalt [%] | Festigkeit 2) nach 5 min | 10 min | 1 d | Endfest. | Trans- parenz 4) | Schälkraft 5) [N] |
|---|---|---|---|---|---|---|---|---|
| 15 | 3-APh<br>1,4-DMB<br>4-MPh<br>1,3-DMB | 61,0<br>12,0<br>12,0<br>15,0 | 1 | 0 - 1 | 0 | 0 - 1 | 0 | 3,8 |
| 16 | 3-APh<br>1,4-DMB<br>4-MPh<br>1,3-DMB | 61,0<br>8,0<br>15,5<br>15,5 | 1 | 1 | 0 - 1 | 1 | 0 | 2,7 |
| 17 | 3-APh<br>1,4 DMB<br>1,3-DHB<br>1,3-DMB | 52,6<br>15,8<br>13,2<br>18,4 | 1 | 0 - 1 | 0 - 1 | 0 - 1 | 0 | 3,9 |
| 18 | 3-APh<br>1,4-DMB<br>1,3-DHB<br>1,3-DMB | 54,1<br>13,5<br>16,2<br>16,2 | 1 | 0 - 1 | 0 | 0 | 0 | 6,0 |
| 19 | 3-APh<br>1,4-DMB<br>1,3-DHB<br>1,3-DMB | 52,6<br>15,8<br>15,8<br>15,8 | 0 - 1 | 0 | 0 | 0 | 0 | 6,4 |

**Anmerkungen zu den Tabellen 2 und 3**

1) Abkürzungen siehe Tabellen 4 und 5.

2) Festigkeiten nach folgender Skala bewertet:
0 = sehr gut, 1 = gut, 2 = mäßig,
3 = schlecht, 4 = keine Haftung;
Endfestigkeit: nach 14 d bei Raumtemperatur

3) Auftreten von sichtbaren Kristallen.

4) Transparenz nach folgender Skala bewertet:
0 = glasklar, 1 = punktweise milchig,
2 = leicht milchig, 3 = milchig.

5) Nach dem in den Fig. 2 und 3 erläuterten Verfahren durch Mittelwertbildung erhalten.

6) Phenol als Vergleichsbeispiel.

Tabelle 4

| Klebstoffkomponenten | | |
|---|---|---|
| IUPAC-Name | Trivialname | Abkürzung |
| 1,3-Dihydroxybenzol | Resorcin | 1,3-DHB |
| 3-Methoxyphenol | Resorcinmonomethylether | 3-MPh |
| 3-Acetoxyphenol | Resorcinmonoacetat | 3-APh |
| 1,3-Dimethoxybenzol | Resorcindimethylether | 1,3-DMB |
| 1,4-Dihydroxybenzol | Hydrochinon | 1,4-DHB |
| 4-Methoxyphenol | Hydrochinonmonomethylether | 4-MPh |
| 1,4-Dimethoxybenzol | Hydrochinondimethylether | 1,4-DMB |
| 1-Chlor-2,5-dihydroxybenzol | Chlorhydrochinon | 1,2,5-CDB |
| 1,3,5-Trihydroxybenzol | Phloroglucin | 1,3,5-THB |
| Phenol | Phenol | PhOH |

Tabelle 5

| Kristallisationshemmer und Lösungsmittel | | |
|---|---|---|
| IUPAC-Name | Trivialname | Abkürzung |
| (E)-4-Phenyl-3-buten-2-on | Benzalaceton | PBO |
| Benzo[c]oxolen-2,5-dion | Phthalsäureanhydrid | BDO |
| 1,5-Pentandisäure | Glutarsäure | PDS |
| Ethansäure | Essigsäure | AcOH |
| Ethansäure-ethenylester | Vinylacetat | EEE |
| Ethansäure-methylester | Methylacetat | EME |

## Patentansprüche

1. Klebstoff für transparente Kunststoffe, dadurch gekennzeichnet, daß er mindestens ein Polyhydroxyaren-Derivat enthält.

2. Klebstoff nach Anspruch 1, gekennzeichnet durch einen Gehalt an mindestens einem Polyhydroxyaren-Derivat gemäß Formel (I):

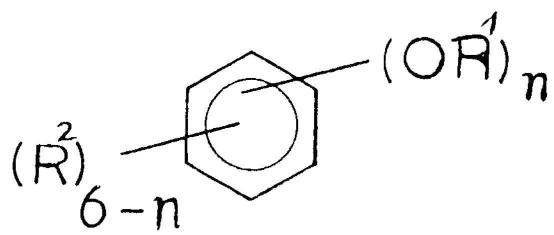

I

wobei $2 \leqq n \leqq 6$ ist, $R^1$ für H, Alkyl, Aryl, Alkylcarbonyl oder Arylcarbonyl und $R^2$ jeweils für H oder beliebige aromatische Substituenten steht, die keine Absorption des Gesamtmoleküls im Wellenlängenbereich zwischen 400 und 800 nm verursachen.

3. Klebstoff nach Anspruch 2, dadurch gekennzeichnet, daß $R^1$ jeweils für H, eine Alkyl($C_1$-$C_5$)- oder eine Alkylcarbonyl($C_1$-$C_5$)-Gruppe steht.

4. Klebstoff nach Anspruch 2 oder 3, dadurch gekennzeichnet, daß $R^1$ jeweils für H, Methyl oder Acetyl steht.

5. Klebstoff nach einem der Ansprüche 1 bis 4, dadurch gekennzeichnet, daß $R^2$ jeweils für H oder eine Alkylgruppe steht.

6. Klebstoff nach einem der Ansprüche 2 bis 5, dadurch gekennzeichnet, daß $R^2$ jeweils für H oder eine Methyl-Ethyl-,n-Propyl- bzw. n-Butyl-Gruppe steht.

7. Klebstoff nach Anspruch 2, dadurch gekennzeichnet, daß $n = 2$ und $R^1 = R^2 = H$ ist.

8. Klebstoff nach Anspruch 2,

dadurch gekennzeichnet,
daß n = 3 und $R^1$ = $R^2$ = H ist.

**9.** Klebstoff nach Anspruch 2,
gekennzeichnet durch einen Gehalt an 1,3-Dihydroxybenzol (Resorcin) und/oder 1,4-Dihydroxybenzol (Hydrochinon).

**10.** Klebstoff nach Anspruch 2,
gekennzeichnet durch einen Gehalt an 1,3,5-Trihydroxybenzol (Phloroglucin).

**11.** Klebstoff nach Anspruch 2, 9 oder 10,
gekennzeichnet durch einen Gehalt an 1,3- und/oder 1,4-Dimethoxybenzol.

**12.** Klebstoff nach Anspruch 2, 9, 10 oder 11,
gekennzeichnet durch einen Gehalt an 3- und/oder 4-Methoxyphenol.

**13.** Klebstoff nach Anspruch 2, 9, 10, 11 oder 12,
gekennzeichnet durch einen Gehalt an 3- und/oder 4-Acetoxyphenol.

**14.** Klebstoff nach Anspruch 2, 9, 10, 11, 12 oder 13,
gekennzeichnet durch einen Gehalt an 1-Chlor-2,5-dihydroxybenzol.

**15.** Klebstoff nach einem der Ansprüche 1 bis 14,
dadurch gekennzeichnet,
daß das Polyhydroxyaren-Derivat in mindestens einem organischen Lösungsmittel gelöst ist.

**16.** Klebstoff nach Anspruch 15,
dadurch gekennzeichnet,
daß das Lösungsmittel aus den Substanzklassen, die Haloalkane, Ester, Ketone und Alkohole umfassen, ausgewählt ist.

**17.** Klebstoff nach Anspruch 16,
gekennzeichnet durch einen Gehalt an Dichlormethan oder 1,1,1-Trichlorethan.

**18.** Klebstoff nach Anspruch 16 oder 17,
gekennzeichnet durch einen Gehalt an Propanon (Aceton), 2-Butanon oder 3-Methyl-2-butanon.

**19.** Klebstoff nach Anspruch 16, 17 oder 18,
gekennzeichnet durch einen Gehalt an Ameisensäure- und/oder Essigsäure-alkylester.

**20.** Klebstoff nach Anspruch 16, 17, 18 oder 19,
gekennzeichnet durch einen Gehalt an Essigsäure-methylester.

**21.** Klebstoff nach einem der Ansprüche 2 bis 20,
gekennzeichnet durch einen Gehalt an mindestens einen Kristallisationshemmer.

**22.** Klebstoff nach Anspruch 21,
dadurch gekennzeichnet,
daß als Kristallisationshemmer eine Carbonylverbindung eingesetzt wird.

**23.** Klebstoff nach Anspruch 22,
dadurch gekennzeichnet,
daß als Kristallisationshemmer ein Keton, eine Carbonsäure, ein Carbonsäure-ester oder -anhydrid eingesetzt wird.

**24.** Klebstoff nach einem der Ansprüche 21 bis 23,
dadurch gekennzeichnet,
daß der Anteil des Kristallisationshemmers an der Gesamtmasse des Klebstoffs 25% nicht übersteigt.

**25.** Klebstoff nach einem der Ansprüche 2 bis 24, dadurch gekennzeichnet, daß der Anteil des Lösungsmittels an der Gesamtmasse des Klebstoffs zwischen 0 und 99 Massen-% beträgt.

**26.** Klebstoff nach einem der Ansprüche 2 bis 25, dadurch gekennzeichnet, daß der Anteil des Lösungsmittels zwischen 20 und 80 Massen-% beträgt.

**27.** Klebstoff nach einem der Ansprüche 2 bis 26, gekennzeichnet durch

| | |
|---|---|
| 20-40 Massen-% | 1,3-Dihydroxybenzol, |
| 20-40 Massen-% | 3-Acetoxyphenol sowie |
| 20-60 Massen-% | Essigsäure-methylester. |

**28.** Klebstoff nach einem der Ansprüche 2 bis 26, gekennzeichnet durch

| | |
|---|---|
| 52-76 Massen-% | 3-Acetoxyphenol, |
| 8-16 Massen-% | 1,3-Dimethoxybenzol |
| 8-16 Massen-% | 1,4-Dimethoxybenzol |
| 8-16 Massen-% | 4-Methoxyphenol. |

**29.** Verfahren zum Verkleben von Polyester mittels eines Klebstoffs gemäß einem der Ansprüche 1 bis 28, dadurch gekennzeichnet,
- daß die zu verklebenden Kunststoffteile staubfrei gemacht und getrocknet werden;
- daß der Klebstoff auf einen der zu verklebenden Kunststoffteile in dünner Schicht aufgebracht wird; und
- daß innerhalb der "offenen Zeit" des Klebstoffs die Verklebung durch Zusammenpressen der Kunststoffteile erfolgt.

**30.** Verfahren nach Anspruch 29, dadurch gekennzeichnet, daß der Anpreßdruck, der auf die zu verklebenden Kunststoffteile ausgeübt wird, mindestens 0.05 MPa beträgt.

**31.** Verfahren nach Anspruch 29 oder 30, dadurch gekennzeichnet, daß die "offene Zeit" des eingesetzten Klebstoffs auf bis zu 10 min einstellbar ist.

**32.** Verfahren nach einem der Ansprüche 29 bis 31, dadurch gekennzeichnet, daß die Schichtdicke des auf das Kunststoffteil aufgebrachten Klebstoffs zwischen 0,2 nm und 10 $\mu$m liegt.

**33.** Verfahren nach einem der Ansprüche 29 bis 32, dadurch gekennzeichnet, daß als Kunststoff Poly(ethylenterephthalat) (PETP) oder Poly(butylenterephthalat) (PBTP) eingesetzt werden.

**34.** Verfahren nach einem der Ansprüche 29 bis 33, dadurch gekennzeichnet, daß eine amorphe, hochtransparente PETP-Folie ("APET") eingesetzt wird.

**35.** Verfahren nach einem der Ansprüche 29 bis 34, dadurch gekennzeichnet, daß es in einer kommerziell erhältlichen Lösungsmittel-Klebestation durchgeführt wird.

FIG. 1

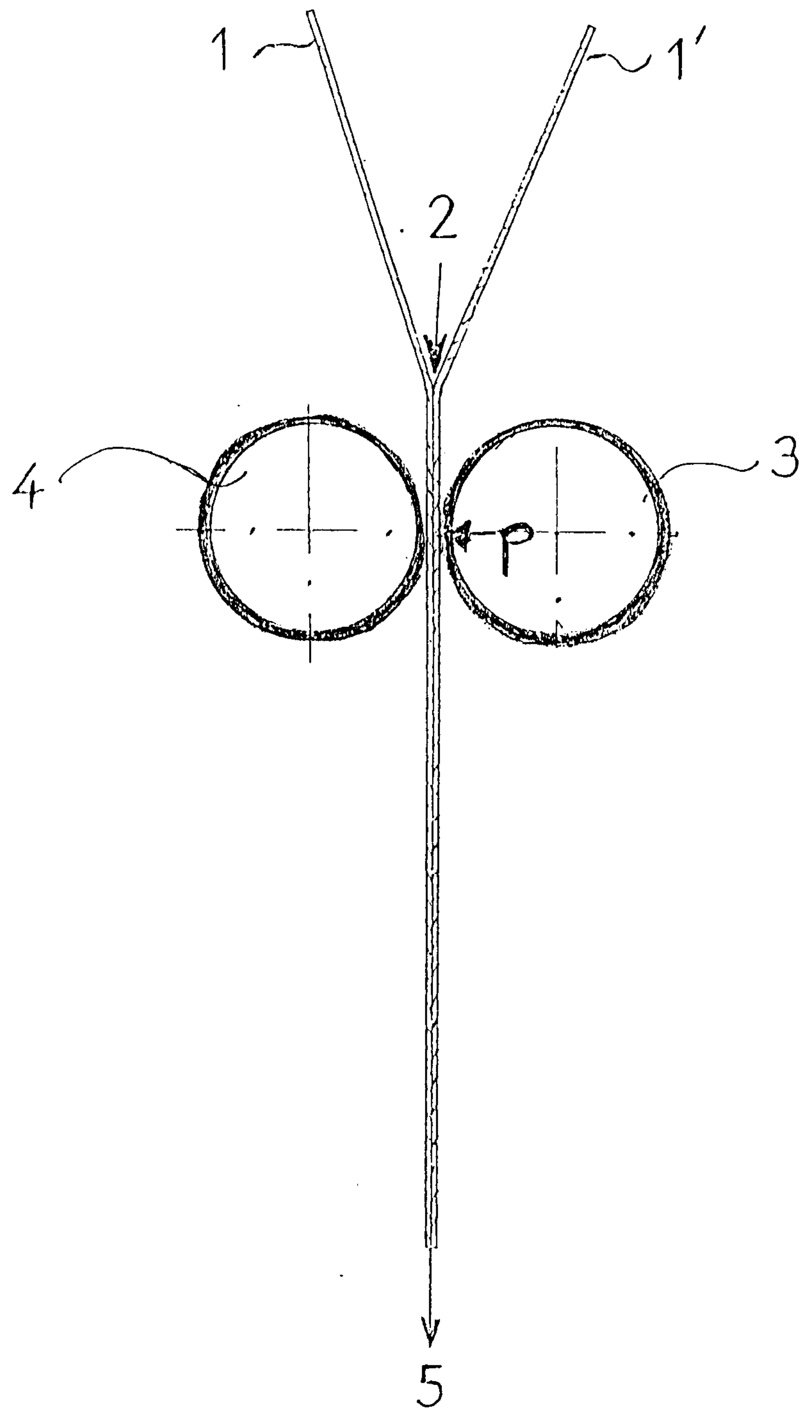

FIG.2

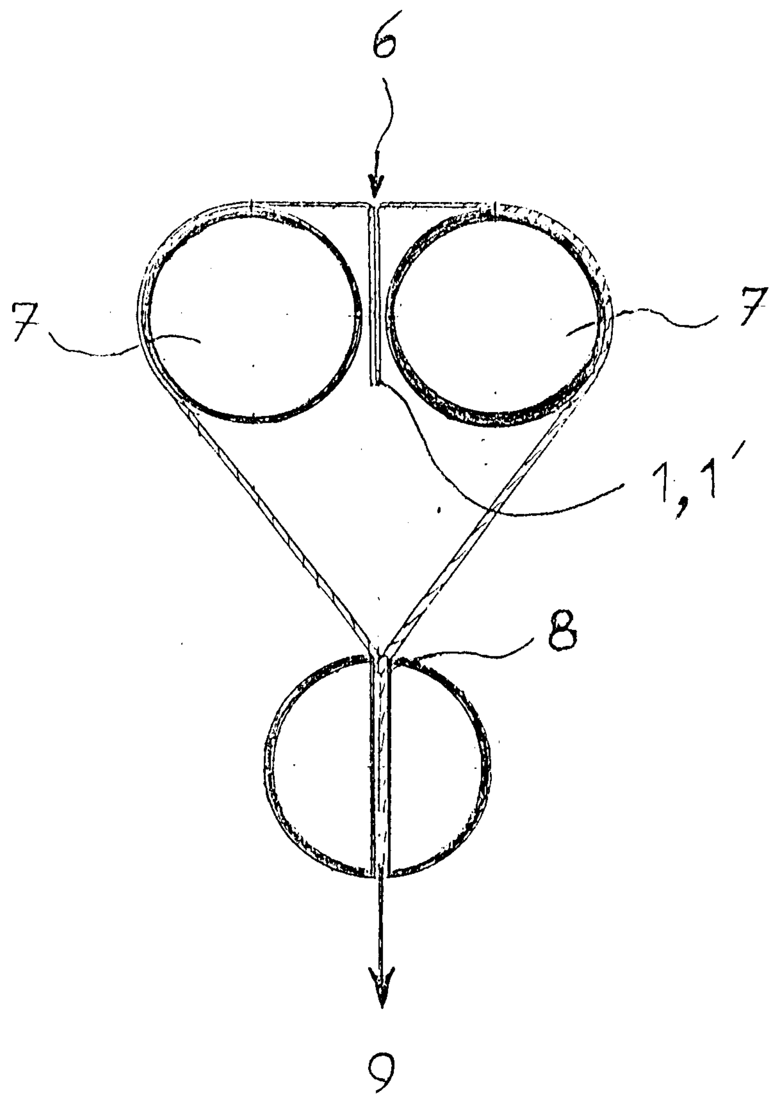

FIG.3

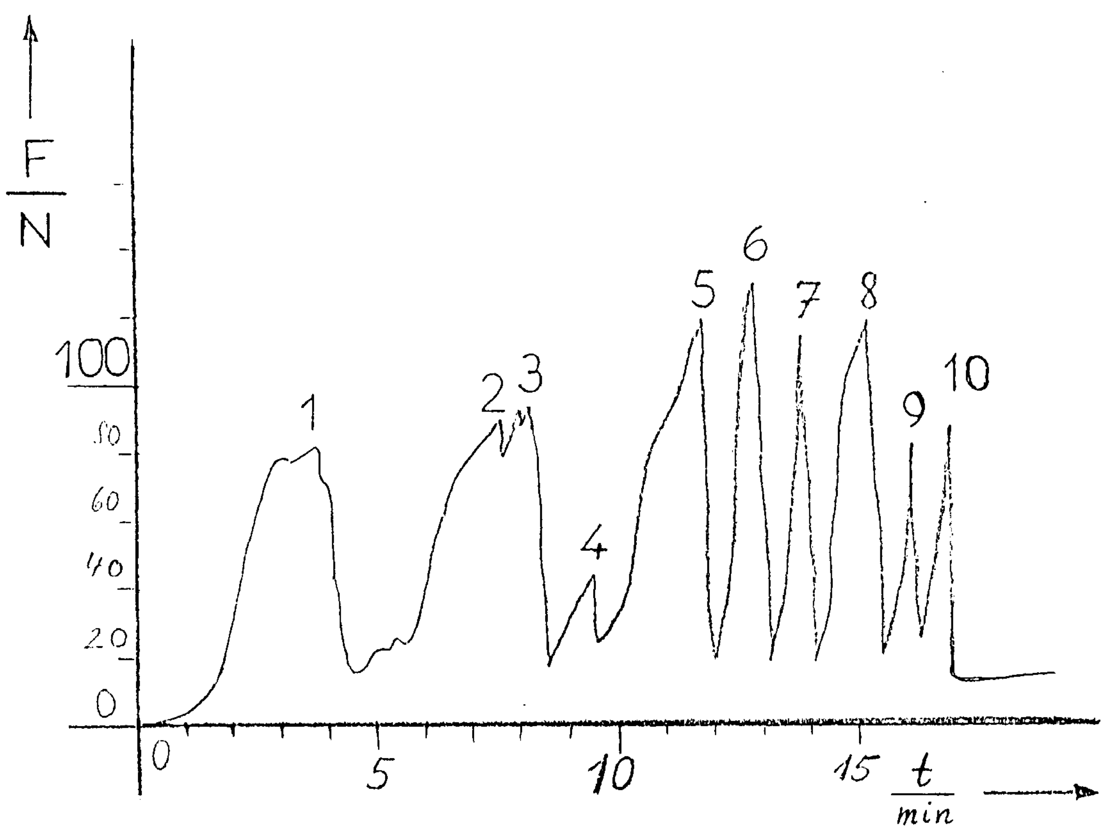

Europäisches Patentamt

# EUROPÄISCHER RECHERCHENBERICHT

Nummer der Anmeldung
EP 92 10 4931

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-1 549 625 (AGFA-GEVAERT)<br>* Ansprüche 1-5 *<br>--- | 1-10, 29-35 | C08J5/12 |
| X | GB-A-1 050 104 (FARBWERKE HOECHST)<br>* Ansprüche 1-8 *<br>--- | 1-7,9, 15-16, 29-35 | |
| X | US-A-3 860 475 (W.J.SIMMONS)<br>* Ansprüche 1-6 *<br>--- | 1-7,9, 29-35 | |
| X | US-A-2 849 359 (W.M.SMITH)<br>* Ansprüche 1-8 *<br>----- | 1-7,9, 29-35 | |

RECHERCHIERTE SACHGEBIETE (Int. Cl.5 )

C08J

Der vorliegende Recherchenbericht wurde für alle Patentansprüche erstellt

| Recherchenort | Abschlußdatum der Recherche | Prüfer |
|---|---|---|
| DEN HAAG | 06 NOVEMBER 1992 | STIENON P.M.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument